# EUROPEAN PATENT APPLICATION

(11) **EP 4 535 614 A1**
(43) Date of publication of application: **09.04.2025**
(21) Application number: 23201233.6
(22) Date of filing: 02.10.2023
(51) Int. Cl.: H02K 1/14, H02K 1/20, H02K 3/24, H02K 9/197, H02K 21/24, H02K 3/34

(54) **AXIAL FLUX MACHINE WITH DIRECT CORE COOLING**

(71) Applicant: Magnax, 8500 Kortrijk (BE)
(72) Inventor: Levrouw, Jasper, 8500 Kortrijk (BE); Leijnen, Peter, 8500 Kortrijk (BE); Rennuy, Mathieu, 8500 Kortrijk (BE)

(57) **Abstract**

A stator (100) for an axial flux machine, comprising:
- stator members (201), each comprising:
∘ a ferromagnetic core (202);
∘ a coil (204);
∘ a sleeve (203) placed around the core (202),

- a housing comprising a port adapted for supplying a cooling fluid,
wherein:
for any of the stator members (201), the sleeve (203) comprises a first (305, 900) and a second set of holes (303, 304), the sets each comprising one or more holes provided as openings in a sleeve wall (301, 302), and any of the holes comprised in the first set (305, 900) being in fluid communication with at least one hole comprised in the second set (303, 304),
such that cooling fluid, for any of the stator members (201) at least partly flows via a path through the sleeve openings (305, 900, 303, 304), thereby flowing along and/or through the respective cores (202).

## Description

### Field of the Invention

The present invention generally relates to the field of axial flux machines. In particular, a stator for an axial flux machine is presented, that allows for an increased cooling efficiency, while guaranteeing sufficient electrical insulation between the cores and respective coils.

### Background of the Invention

An axial flux machine is a type of electrical machine wherein a flux is generated in axial direction, the latter being the direction of the rotational axis. Typically, an axial flux machine comprises a disk- or ring-shaped rotor and stator, both having a central axis corresponding to the rotational axis of the machine, the stator and rotor being axially spaced apart by a narrow air gap. The rotor comprises magnetic material, typically permanent magnets, generating an axial magnetic flux. The stator comprises a plurality of coils in which currents may run. Typically, each of the stator coils is wound around a core made of ferromagnetic material, to direct and focus the magnetic flux. During motor operation, the rotor is driven by magnetic fields generated by the stator currents, while in generator condition currents are induced in the stator coils due to the rotation of the rotor. Different topologies are known for axial flux machines, for example comprising one rotor disk and one stator disk, one rotor disk and two stator disks, or two rotor disks positioned on both sides of a stator disk. The axial flux machine may be of the torus type, having a stator yoke, or may be of the yokeless type, not having a stator yoke.

The stator design of an axial flux motor raises some technical challenges, in particular with respect to cooling of the stator elements. Indeed, during operation of the axial flux machine, both the coils and the cores heat up, which heat needs to be evacuated for reasons of efficiency and durability. In particular, high core temperatures may adversely affect the adhesive that bonds the laminations of the core, thereby imposing a maximum allowed core temperature.

Cooling of the stator may be done in various ways. For example, in a high-performance axial flux machine, the stator may be liquid-cooled, wherein a cooling liquid is circulated inside a hollow stator housing, thereby directly submerging the coils in the cooling liquid. For example, in WO2010/092400 the stator elements are enclosed in a stator housing composed of two clamshells. The stator housing is provided with ports that allow a cooling fluid to be pumped into the spaces between the stator elements in order to cool them. Specific barriers or blocks may be provided in the housing to guide the cooling fluid according to a particular flow pattern.

Due to the cooling fluid closely interacting with the coils, such a liquid-cooled stator enables optimal cooling of the coils. However, heat extraction from the cores is more challenging, given their shielded position. Typically, the temperatures reached in the cores form the actual thermal bottleneck of the motor, thereby limiting the motor power for a given motor size.

Extraction of heat from the cores may be impeded even more, due to the presence of an electric insulating layer between the respective coils and cores. Such insulating layer is placed to prevent that electrical current could flow between the winding and the core, given the arising voltage difference between the coil and core. Especially when high operating voltages apply, high demands are placed on the isolation physically shielding the coils from the cores; even a small breach or split in the insulating material between the coil and the core can allow an electric arc to form, thus creating a short circuit.

In solutions known in the prior art, the insulating layer is made of an electrically insulating sheet that is wrapped around the core, for example a sheet of Nomex paper. Such an insulating sheet may e.g. be used in combination with a liquid-cooled stator as disclosed in WO2010/092400. In this solution, the cores are typically impregnated with a resin, thereby also filling the gap between the Nomex paper and the corresponding core with resin. The filled gap results in an increased thermal resistance, thus adversely affecting the amount of heat that can be extracted from the cores by the cooling liquid.

In other solutions known in the prior art, the insulating layer between a core and coil is provided as a rigid part, for example being moulded from an electrically insulating material, e.g. a plastic. CN212969228U presents a solution wherein an insulating chamfering component is arranged on the outside of the iron core body, being arranged at least near the side corners of the core body, such that the windings wound on the iron core are spaced from the core. In US20150229177A1 an insulating former, composed of a rigid sleeve and two side covers, is used to separate the cores from the respective coils. The text mentions that the sleeve, e.g. made of a polyester material, should be made as thin as possible, however being subject to a minimum thickness determined by the strength of the insulating former. In both example solutions, the rigid part for insulating the cores from the coils, forms an additional, relatively thick layer between the core and respective coil, thereby impeding an efficient heat transfer from the cores.

It is an objective of the present invention to disclose an axial flux machine, that resolves one or more of the above-described shortcomings of the prior art solutions. More particularly, it is an objective to present a stator for an axial flux machine, that allows for an increased cooling efficiency, while guaranteeing sufficient electrical insulation between the cores and respective coils.

### Summary of the Invention

According to a first aspect of the present invention, the above identified objectives are realized by a stator for an axial flux machine defined by claim 1, the stator comprising:
- a central axis in axial direction corresponding to the rotational axis of the axial flux machine when mounted;
- a plurality of stator members, being arranged rotational symmetrically around the central axis, wherein each of the stator members comprises:
   ∘ a ferromagnetic core;
   ∘ a coil, comprising a plurality of turns wound around the core;
   ∘ a sleeve placed around the core, between the core and the coil, the sleeve comprising walls extending in axial direction,
- a housing comprising an internal space located between an inner and outer circumferential wall, the stator members placed inside the internal space, and the housing further comprising one or more ports adapted for supplying a cooling fluid,
wherein:
for any of the stator members, the sleeve comprises a first and a second set of holes, the sets each comprising one or more holes provided as openings in a sleeve wall, and any of the holes comprised in the first set being in fluid communication with at least one hole comprised in the second set,
such that cooling fluid supplied to the internal space, for any of the stator members at least partly flows via a path through the sleeve openings, thereby flowing along and/or through the respective cores.

Thus, the invention concerns a stator of an axial flux machine. The latter may equally be referred to as, for example, an axial air-gap electric motor or generator, or an axial flux permanent magnet machine. An axial flux machine is a type of electrical machine wherein a flux is generated in axial direction, the latter being the direction of the rotational axis. Typically, the machine is suited to operate as a motor and as a generator, depending on the working condition. The axial flux machine has at least one stator and at least one rotor. The rotor comprises magnetic material, typically permanent magnets, generating an axial magnetic flux. During operation, the stator remains stationary, while the rotor, being mounted on the shaft, rotates during operation of the machine. Typically, the stator and rotor each comprise a disk- or ring-shaped component, referred to as a stator disk respectively rotor disk. The stator disk and rotor disk are axially spaced apart by a narrow air gap. Different topologies are possible. For example, the machine may comprise one rotor disk and one stator disk, one rotor disk and two stator disks, or two rotor disks and one stator disk. The axial flux machine may be of the torus type, having a stator yoke, or may be of the YASA type, not having a stator yoke. The latter machine is also referred to as, for example, a yokeless and segmented armature (YASA) motor or generator, or simply a yokeless axial flux machine.

The stator comprises a plurality of stator members, of which the arrangement is typically rotationally symmetrical with respect to the central axis. Every stator member comprises a coil and a core made of ferromagnetic material, each coil having a central axis in axial direction. A coil comprises a plurality of turns, wound around the ferromagnetic core. During motor operation, the rotor is driven by magnetic fields generated by stator currents running in the coils, while in generator condition currents are induced in the stator coils due to the rotation of the rotor. In an embodiment, each of the cores may comprise an elongated central part, e.g. referred to as core bar, and pole shoes, positioned at both opposing ends of the core bar. In another embodiment, no such pole shoes are present.

The height of a stator member, or of the core, coil or sleeve, is measured according to a height direction, wherein this height direction corresponds to the axial direction of the machine. Furthermore, the front side of a stator member, or of the core, coil or sleeve, refers to the side directed towards the inner circumferential wall, while the back side refers to the side directed towards the outer circumferential wall, and the side face refers to the side directed towards an adjacent stator member. The side of the coil facing the sleeve is referred to as the inside or inner side of the coil.

The stator further comprises a housing, the housing comprising an inner circumferential wall and an outer circumferential wall. Typically, the circumferential walls are arranged coaxially. An internal space is located between an inner and outer circumferential wall, wherein the stator members are placed inside the internal space, between the inner and outer circumferential wall. Typically, the housing further comprises a top and bottom wall, serving as opposing cover plates, and typically provided as two parallel discoid walls. The top and bottom wall are connected by the circumferential walls extending in axial direction. In an embodiment, the stator cores are completely located inside the stator housing, thus not extending through the top and bottom wall. In another embodiment, the stator cores extend through holes provided in the top and bottom wall. Thus, in the latter case, when two rotor disks are provided on both sides of the stator disk, the end faces of the ferromagnetic core, are in contact with the air gap, the end faces being the surfaces of the ferromagnetic cores that face the two respective rotors. In any embodiment the housing thus encompasses the stator members, though in particular embodiments the stator members may be in contact with the surroundings of the housing via the aforementioned holes.

Apart from the top wall, bottom wall and circumferential walls, the stator housing may as well comprise an internal structure. For example, the stator housing may comprise internal walls positioned between adjacent stator members, e.g. for guiding the stator cooling fluid. Typically, such guiding walls extend in radial direction and in axial direction. The internal walls or guiding walls may connect the bottom wall and top wall. In another embodiment, no such guiding walls or other type of internal structure are present.

The housing of the stator further comprises one or more ports adapted for supplying a cooling fluid. During operation, the stator is thus liquid-cooled, wherein a cooling liquid, e.g. oil or water, is supplied to the inside of the housing via the one or more ports. The cooling liquid is thus circulated between the stator members, thereby extracting heat from the stator members.

Every stator member comprises a core sleeve, placed between the core and the coil. A sleeve refers to a hollow structure, wherein the core is placed inside the hollow sleeve. The sleeve is thus placed around the core, and the coil is placed around the sleeve. The sleeve may be made of a flexible material, e.g. paper or a flexible type of plastic, or may be made of a rigid material, e.g. an injection-moulded part made of solidified plastics. The side of the sleeve facing the core is referred to as the inside or inner side, and the side of the sleeve facing the coil is referred to as the outside or outer side. The sleeve comprises walls extending in axial direction, the walls being provided in sleeve material and being connected to one another, thereby defining a tube-shaped structure. In particular, any of the sleeves comprises a first wall directed to the outer circumferential wall of the housing, a second wall directed to the inner circumferential wall of the housing, and sidewalls directed to an adjacent stator member, wherein the first wall and the second wall each are connected to both sidewalls.

For any of the stator members, the sleeve comprises a first and a second set of holes, the sets each comprising one or more holes provided as openings in a sleeve wall. Thus, the first set comprises one hole or multiple holes, any of the holes being an opening in one particular sleeve wall. Moreover, the second set comprises one hole or multiple holes, any of the holes being an opening in another sleeve wall. Any of the holes, comprised in the first and second set, is adapted to form a fluid passage through a sleeve wall, i.e. a fluid can flow through the respective opening, thereby flowing from the outer side of the sleeve towards its inner side or vice versa. For example, the first set of holes is provided in the first sleeve wall, directed to the outer circumferential wall of the housing, and the second set of holes is provided in the second sleeve wall, directed to the inner circumferential wall of the housing.

The one or more openings in a sleeve wall may be implemented according to various embodiments. In one possible embodiment, any of the sleeve openings is provided as a perforation through the sleeve wall, i.e. a perforation being made through sleeve material. In this case, any of the holes, comprised in the first and second set, is bordered by sleeve material over its full circumference. For example, an opening is a circular hole, or an aperture having a closed circumference according to another shape. In another embodiment, any of the sleeve openings is an opening extending over the full height of the sleeve, thereby splitting the respective sleeve wall in two separate portions. For example, an opening is a slit in the sleeve wall, extending from the bottom side of the wall to the top side of the wall. In an embodiment, the two portions of the sleeve wall, at both sides of the slit, may be overlapping portions, thereby defining a zig-zag passage through the sleeve wall. Also a combination of the aforementioned embodiments is possible. For example, the one or more holes comprised in the first set are provided as perforations through a sleeve wall, and the one or more holes comprised in the second set are provided as a slit in another sleeve wall, the slit extending over the full height of that other sleeve wall.

Any of the holes comprised in the first set is in fluid communication with at least one hole comprised in the second set. This implies that a fluid entering via a hole of the first set can reach some or all of the holes of the second set, and a fluid entering via a hole of the second set can reach some or all of the holes of the first set. In an embodiment, both sets each comprise multiple holes, wherein any of the holes of the first set is in fluid communication with each hole of the second set. In another embodiment, both sets each comprise multiple holes, wherein any of the holes of the first set is only in fluid communication with one particular hole of the second set. In yet another embodiment, the first set consists of one hole, while the second set consists of multiple holes, and the one hole of the first set is in fluid communication with any of the holes of the second set. In yet another embodiment, the first set consists of multiple holes, while the second set consists of one hole, and any of the holes of the first set is in fluid communication with the one hole of the second set.

Due to the presence of the openings in the sleeve walls, a cooling fluid supplied to the internal space of the housing, will - for any of the stator members - at least partly flows via a path through the sleeve openings, thereby flowing along and/or through the respective cores. This means that some or all of the cooling fluid follows a trajectory that passes through the first set of holes, and passes through the second set of holes. For a particular stator member, the first set may form the fluid entry, the fluid thus flowing from the first set towards the second set, while for another stator member, the first set may form the fluid exit, the fluid thus flowing from the second set towards the first set. In another embodiment, the first set may serve as entry holes for all stator members, and the second set as exit holes for all stator members, the fluid thus flowing from the first set towards the second set for any of the stator members. Typically, some of the cooling fluid is diverted towards the aforementioned trajectory passing through the sleeve openings, while the remaining portion follows another path, e.g. running along the outside of the sleeve and/or along the outer side of the coil.

The trajectory passing through the sleeve openings further comprises a portion wherein the cooling fluid flows along and/or through the core. Thus, while flowing from the first set towards the second set, or vice versa, the fluid flows either along the core, or through the core, or a portion flows along the core and another portion flows through the core.

Flowing along the core means that the fluid flows along the outer surfaces of the core. The outer surfaces of the core are defined as the core surfaces extending in axial direction, and being parallel with the axial direction. For example, the fluid first passes through the first set of holes, thereby reaching the back side of the core, then splits into a substream flowing along one side face of the core and another substream flowing along the other side face of the core, after which the two substreams come together at the front side of the core, and collectively pass through the second set of holes. While flowing along the core, the cooling fluid thus follows a path between the inside of the sleeve and the outer surfaces of the core. Typically, when flowing along the core, the cooling fluid is in direct contact with the outer surfaces of the core.

Flowing through the core means that the fluid flows through core material, i.e. it flows in one or more channels which penetrate through the core. Any of the channels comprises two opposing open ends, allowing the fluid to enter and exit the channel. For example, the fluid first passes through the first set of holes, thereby reaching the back side of the core, then flows through the one or more channels to reach the front side of the core, after which it passes through the second set of holes. In an embodiment, any of the channels is bordered by core material, such that the cooling fluid is in direct contact with the surrounding core material when flowing through the channel. In another embodiment, some additional material may be present, e.g. a thin-walled pipe placed inside the channel, such that the cooling fluid in contact with the additional material when flowing through the channel.

For reaching the sleeve openings serving as entry holes, different embodiments are possible. For example, turns of the coil may be spaced apart, such that cooling fluid reaches the outside of the sleeve by flowing through the passages provided between adjacent turns of the coil. Afterwards, the fluid flows through the sleeve openings serving as entry holes, being either the first or second set of holes. In another embodiment, the cooling fluid may reach the outside of the sleeve via the top or bottom side of the coil, thus flowing above or underneath the coil before reaching the outside of the sleeve and flowing through the entry holes.

The advantage of the cooling fluid flowing along and/or through the cores is that an increased heat evacuation from the cores is obtained, due to the direct contact or close interaction between the cooling fluid and core material. Thus, for a given motor power, lower temperatures are reached in the cores compared to prior art solutions wherein the cores are shielded from the cooling fluid. This contributes to obtaining a higher motor power for a given motor size. On the other hand, the presence of the sleeves still ensures sufficient electric insulation between he respective coils and cores. Indeed, as only small-sized openings suffice to form fluid passages, and such openings may be provided in thicker sleeve parts, at positions where the coil and core are sufficiently spaced apart, the creation of an electric arc between the coil and the core is avoided.

Optionally, according to claim 2, the cooling fluid supplied to the internal space at least partly flows along and/or through the cores, thereby being in direct contact with the respective cores. When the cooling fluid flows along the core, this implies that the cooling fluid is in direct contact with at least a part of the outer surfaces of the core, without any intermediate material being present between the outer surfaces and the cooling fluid. When the cooling fluid flows through the core, this implies that the cooling fluid is in direct contact with the surrounding core material forming the boundary surface of the cooling channel through the core.

Optionally, according to claim 3, the cooling fluid supplied to the internal space at least partly flows along the cores, thereby flowing, for each of the stator members, in one or more channels between the respective sleeve and core. This implies that some space is available between the inner side of the sleeve and an outer surface of the core, forming a fluid passage for the cooling fluid. Any of the channels is in fluid communication with at least one hole of the first set, and is in fluid communication with at least one hole of the second set. In an embodiment, two channels are present, wherein one channel covers a first portion of the core's outer circumference, and the other channel covers a second portion of the core's outer circumference, such that the cooling flow is divided into two substreams when flowing along the core. For example, each of the substreams flows subsequently along a part of the back side of the core, a side face of the core, and a part of the front face of the core, after which they are combined again. In another embodiment, multiple channels may be present, at different height positions and mutually separated.

Optionally, according to claim 4, any of the channels between the sleeve and the core is defined by:
- an open space between the core surface and a sleeve wall, over the full height of the sleeve, and/or
- a groove provided in the core surface, and/or
- a groove provided at the inner side of a sleeve wall, the inner side facing the core. In a first embodiment, the channel between the inner side of the sleeve and an outer surface of the core is provided as a slit between the sleeve wall and the core, i.e. the sleeve and the core are spaced apart over the full height of the sleeve. In a second embodiment, the channel between the inner side of the sleeve and an outer surface of the core is provided as a groove in the core outer surface, e.g. running from the back side of the core towards the font side of the core. In this case, a fluid passage is available due to the open space at the position of the groove, while at other positions, the sleeve may be in contact with the core without any open space therebetween. In a third embodiment, the channel between the inner side of the sleeve and an outer surface of the core is provided as a groove at the inner side of the sleeve, e.g. running from the back side of the sleeve towards the font side of the sleeve. In this case, a fluid passage is available due to the open space at the position of the groove, while at other positions, the sleeve may be in contact with the core without any open space therebetween. Also any combination of the aforementioned embodiments is possible.

Optionally, according to claim 5, the cooling fluid supplied to the internal space at least partly flows through the cores, thereby flowing, for each of the stator members, in one or more channels running through the respective core. In an embodiment, there is a single channel through the core, e.g. running from the back side of the core towards the front side of the core. In other embodiments, multiple separate channels may be present, next to each other or above one another. Any of the channels has two open ends and is delimited by a surface in core material, the flow in the channel thus being surrounded by core material. The cooling fluid may be in direct contact with the core material, or an intermediate material may be present, e.g. provided as a thin-walled pipe inside the channel.

Optionally, according to claim 6, for each of the stator members, the core is split at one or more positions along its height, such that the core is composed of multiple core parts, two opposing core parts connected to each other at respective connection surfaces, and at least one of the channels through the core is defined by a gap remaining between opposing connection surfaces in connected condition of the core parts. Because of the applied assembly method, it may be required that the cores are split into multiple core parts, the split being at one or more positions along the height of the core. Thus, initially, a core is provided as separate core parts, e.g. two core halves, and during assembly, the separate core parts are connected to each other to form the core. Connecting two core parts may e.g. occur via gluing, and/or via a mechanical connection like a press-fit or a snap fit. Every core part comprises a connection surface, and in connected condition of the core, the opposing connection surfaces of respective core parts are mainly in contact with one another. However, some gap may remain between the two opposing core parts, due to the opposing connection surfaces not being completely into contact with one another. If the gap extends between two different outer surfaces of the core, and has two open ends, the gap forms a channel through the core. Typically, the gap extends between the back side of the core and the front side of the core. In this way, the gap at the opposing connection surfaces forms a channel through the core, wherein a cooling fluid may flow.

The gap at opposing connection surfaces may e.g. be present due to a groove at one or both of the connection surfaces, or may exist as an open space remaining between mated elements. Mating elements or mating features may e.g. be present at the connection surfaces - one mating feature at each of the opposing connection surfaces - to serve as positioning features or connection features. If the shape of respective mating features is such that they are mainly complementary but not completely complementary, a gap remains between mated elements, which may serve as a cooling channel.

Optionally, according to claim 7, for each of the stator members, the core is composed of multiple core parts, connected to each other by means of a snap-fit connection, and at least one of the channels through the core is defined by a gap remaining between interlocking features of the snap fit in connected condition of opposing core parts. Thus, a pair of mating elements is provided at opposing connection surfaces, wherein the mating elements are designed as interlocking features, thereby allowing for a snap-fit joint between two corresponding core parts. For example, a first mating element at a first connection surface is provided as a protrusion, while the corresponding second mating element is provided as a recess. In another embodiment, the first mating element and the second mating element each comprises a protrusion and a recess, wherein the protrusion of the first mating element fits into the recess of the second mating element and vice versa. Typically, one of the mating elements comprises an undercut and the corresponding mating element comprises an overhang, such that the overhang snaps into the undercut, thereby forming the snap fit connection. In order to facilitate mating of the two elements, typically some clearance is present between the two interlocking features. Thus, in connected condition of the core parts, some small gap remains between the mated interlocking features of the snap fit. In an embodiment, multiple of such gaps may be present. Typically, the interlocking features extend over the connection surface, such that the gap extends between opposing core sides, typically between the back side and the front side of the core. Accordingly, the one or more gaps between mated interlocking features may serve as channels, through which the cooling fluid may pass.

Optionally, according to claim 8, at least one of the channels through the core is a dedicated channel provided in a massive portion of the core. In this case, the channel is not provided at opposing connection surfaces, but is applied through core material. The channel is thus running through a solid or massive portion of the core. A massive portion of the core may e.g. be the core as a whole, if the cores are not provided as split core parts, or may be an individual core part forming a single piece. The massive portion thus refers to a single piece or solid block, although the piece or block itself may be composed of various materials, e.g. when the core is laminated. The channel is applied intentionally through the core material, thus being a dedicated channel. For example, it is provided as a bored channel.

One or more channels may run through each of the cores, e.g. a single dedicated channel, multiple dedicated channels, a single channel due to a snap fit, multiple channels due to a snap fit, etc. Also a combination is possible, wherein for example a dedicated channel is combined with a channel due to a snap fit.

Optionally, the cross section of the dedicated channel has a rectangular shape.

Optionally, according to claim 9, the cross section of the dedicated channel has a rectangular shape, the aspect ratio of the rectangular cross section being such that the height is larger than the width. The height of the channel is measured according to the axial direction, and the width perpendicular to the axial direction. Having an aspect ratio wherein the height is larger than the width allows to maximize the thermal contact area, while minimally interfering with magnetic flux.

Optionally, any of the channels through the core runs according to a direction perpendicular to the axial direction. This implies that the central axis of a channel lies in a single plane at a given height position, the plane being perpendicular to the axial direction. Multiple channels may be present, each at a different height position.

Optionally, according to claim 10, any of the channels through the core runs according to a direction perpendicular to the height direction or axial direction, and, for any of the channels through the core, the height position is such that the channel is closer to the core centre than to the first core end and is closer to the core centre than to the second core end. According to the height direction, the core extends between two ends. The core centre is located at half height of the core, halfway between the two core ends. The central axis of a channel lies in a single plane at a given height position, the plane being perpendicular to the axial direction. The channel axis is located at a distance, measured according to the height direction, from the core centre, and at a distance, measured according to the height direction, from the first core end, wherein the latter distance is larger than the former distance. Furthermore, the channel axis is located at a distance, measured according to the height direction, from the core centre, and at a distance, measured according to the height direction, from the second core end, wherein the latter distance is larger than the former distance. Positioning the cooling channels through the core closer to the core centre allows to evacuate heat from the cores at the spots where the cores become hottest, namely in the core centre, thereby contributing in lowering the maximal core temperature.

Optionally, any of the channels through the core runs in radial direction. This means that the central axis of a channel lies in a direction crossing the centre of the stator disk. Typically, the channel runs in the radial direction defining a symmetrical axis of the particular core, when considering a cross section perpendicular to the axial direction.

Optionally, according to claim 11, for any of the stator members, the first set of holes and the second set of holes are positioned at opposite sides of the core sleeve, the first set directed to the outer circumferential wall of the housing, and the second set directed to the inner circumferential wall of the housing. In other words, the first set comprises one or more holes provided as openings in the first sleeve wall, the first sleeve wall facing the outer circumferential wall of the housing, and the second set comprises one or more holes provided as openings in the second sleeve wall, the second sleeve wall facing the inner circumferential wall of the housing. The holes of the first set are thus positioned at the back side of the sleeve, and the holes of the second set are positioned at the front side of the sleeve.

Optionally, for any of the stator members, the first set of holes and the second set of holes each comprise multiple separate holes, the multiple holes located at different positions along the height direction. Each set thus comprises two or more individual holes, separated from one another by sleeve material. The holes comprised in one set each have a centre point at a different height positions. For example, the holes of one set are positioned above one another, with their centre points at the same radial position.

Optionally, according to claim 12, for any of the stator members, each of the holes comprised in the first and/or second set defines a zig-zag passage through a sleeve wall. This implies that a hole in the sleeve wall is designed as a labyrinth; in a cross section according to a plane perpendicular to the axial direction, the hole is e.g. bordered by Z-shaped, S-shaped, or L-shaped edges, thereby defining respectively a Z-shaped, S-shaped or L-shaped passage through the wall. Accordingly, a fluid flowing through the hole will not just follow a single direction, but will be redirected to another direction due to the bent edges, thereby following a zig-zag trajectory. For example, a flow initially flowing in radial direction when entering the hole, will be redirected to the tangential direction, and subsequently again be redirected to the radial direction. In an embodiment, an opening in the sleeve wall is provided as a slit extending over the height of the sleeve, wherein the two separate portions of the sleeve wall - at both sides of the slit - are overlapping to create the zig-zag passage. In this case, the fluid passage through the sleeve wall is defined as a zig-zag over the complete sleeve height. In another embodiment, an opening in the sleeve wall is provided as a bordered perforation through sleeve wall material, such that the zig-zag passage is only present over a portion of the sleeve height. The advantage of having zig-zag shaped holes is that creepage distances are enlarged, thereby contributing to an increased electric insulation between the core and the coil, and thus minimizing the risk that an electric arc would be formed.

Optionally, for any of the stator members, the core sleeve comprises a first wall directed to the outer circumferential wall of the housing, a second wall directed to the inner circumferential wall of the housing, and sidewalls directed to an adjacent stator member, the holes of the first respectively second set being provided as openings in the first respectively second wall, and
- at the position of the first wall, the distance between the core outer surface and the inside of the coil, measured in a plane perpendicular to the axial direction, is larger than at the position of the sidewalls, an
- at the position of the second wall, the distance between the core outer surface and the inside of the coil, measured in a plane perpendicular to the axial direction, is larger than at the position of the sidewalls.
This implies that at the side of the stator member where the sleeve holes are found, the coil is further away from the core than at the other sides. This contributes to an increased electric insulation between the core and the coil, and thus minimizing the risk that an electric arc would be formed at the positions where openings through the sleeve walls are present.

Optionally, according to claim 13, for any of the stator members, the core sleeve comprises a first wall directed to the outer circumferential wall of the housing, a second wall directed to the inner circumferential wall of the housing, and sidewalls directed to an adjacent stator member, the holes of the first respectively second set being provided as openings in the first respectively second wall, and
- at least a portion of the first wall has a larger thickness than each of the sidewalls, and
- at least a portion of the second wall has a larger thickness than each of the sidewalls.
The first and the second wall may have a constant thickness, or may have a non-constant, varying thickness. For example, a non-constant thickness may apply when at the radial position of the hole(s), the wall has a smaller thickness than at other radial positions. The maximal thickness of the first wall is larger than the maximal thickness of any of the sidewalls, and the maximal thickness of the second wall is larger than the maximal thickness of any of the sidewalls. Consequently, at the position of the first wall, the inside of the coil is at a larger distance from the core outer surface than at the position of the sidewalls. Similarly, at the position of the second wall, the inside of the coil is at a larger distance from the core outer surface than at the position of the sidewalls. This contributes to an increased electric insulation between the core and the coil, and thus minimizing the risk that an electric arc would be formed at the positions where openings through the sleeve walls are present. Moreover, due to the thin sleeve walls in between adjacent stator members, a minimal amount of space is taken by the sleeves in tangential direction, thereby allowing for a maximal amount of stator members in the housing.

Optionally, for any of the stator members, the core sleeve comprises a first wall directed to the outer circumferential wall of the housing, and a second wall directed to the inner circumferential wall of the housing, and
- the first and second wall each comprise a recess provided at their side facing the core, the recess extending according to the axial direction, thereby defining a first respectively second axial channel, and
- the holes of the first respectively second set are provided as openings in the first respectively second wall, thereby penetrating through the first respectively second wall at the position of the first respectively second axial channel.
The axial channel enables a fluid passage in axial direction. In particular, the axial channel may form a connection between a sleeve hole and the channel through the core, if the sleeve holes are not at the same height position as the core channel. Thus, the sleeve holes and the channel through the core are in fluid communication due to the presence of the two axial channels. For example, the inner side of the sleeve may be pressed against the core outer surfaces, while at the position of the recess, open space remains between the inner side of the sleeve wall and the outer core surface, thereby allowing the fluid to flow from a sleeve hole to the entry of the channel through the core, and from the exit of the channel through the core to an opposing sleeve hole.

Optionally, for any of the stator members, the core sleeve is an injection-moulded part. The core sleeve is thus a rigid part, e.g. provided in plastics, obtained from an injection moulding process.

Optionally, according to claim 14, for any of the stator members, at least some of the turns of the coil are spaced apart, thereby establishing fluid passages through the coil. This implies that spaces are available between adjacent turns of the coil, allowing the cooling fluid to flow through, thereby reaching the sleeve, after which the fluid flows through the sleeve openings acting as entry holes. Similarly, after flowing through the sleeve openings acting as exit holes, the fluid may flow through the passages between turns of the coil.

Optionally, according to claim 15, the stator is arranged such that, for any of the stator members, a main flow of cooling fluid splits into multiple substreams, comprising:
- a first substream wherein cooling fluid flows around the stator member, in direct contact with the side of the coil facing away from the core, and/or a second substream wherein cooling fluid flows around the core sleeve, in direct contact with the side of the sleeve facing away from the core,
   and
- a third substream wherein cooling fluid flows via the path through the sleeve openings, thereby flowing along and/or through the core.

The stator is liquid-cooled, wherein a cooling fluid is circulated inside the stator housing for cooling the stator members. In this, multiple substreams may branch of from the main flow. The third substream represents the flow through the core and/or along the core, due to the presence of the sleeve openings. The third substeam is always present. Additionally, a first substream may be present, or a second substream, or both the first and second substream. The first substream represents the portion of the cooling fluid flowing at the outside of the coils. The second substream represents the portion of the cooling fluid flowing between the coils and respective sleeves.

According to a second aspect of the present invention, the above identified objectives are realized by a method for operating a stator of an axial flux machine, the method comprising:
- providing an axial flux machine comprising a stator, the stator comprising:
   ∘ a central axis in axial direction corresponding to the rotational axis of the axial flux machine;
   ∘ a plurality of stator members, being arranged rotational symmetrically around the central axis, wherein each of the stator members comprises:
      ▪ a ferromagnetic core;
      ▪ a coil, comprising a plurality of turns wound around the core;
      ▪ a sleeve placed around the core, between the core and the coil, the sleeve comprising walls extending in axial direction,
   ∘ a housing comprising an internal space located between an inner and outer circumferential wall, the stator members placed inside the internal space, and the housing further comprising one or more ports adapted for supplying a cooling fluid,
   wherein, for any of the stator members, the sleeve comprises a first and a second set of holes, the sets each comprising one or more holes provided as openings in a sleeve wall, and any of the holes comprised in the first set being in fluid communication with at least one hole comprised in the second set,
- supplying a cooling fluid to the internal space, wherein for any of the stator members the cooling fluid at least partly flows via a path through the sleeve openings, thereby flowing along and/or through the respective cores.

### Brief Description of the Drawings

Fig. 1 illustrates a stator and rotor, according to an embodiment of the invention.
Fig. 2 illustrates a stator, of which the top cover is removed, according to an embodiment of the invention.
Fig. 3 gives a 3D-view of a sleeve, according to an embodiment of the invention, wherein two variants are shown.
Fig. 4 to Fig. 6 illustrate a first embodiment of the invention, wherein the cooling fluid flows along the cores. Fig. 4 gives a cross section according to a plane perpendicular to the axial direction. Fig. 5 and Fig. 6 give a detailed view of such cross section. In particular, Fig. 6 illustrates a specific zig-zag shape of a sleeve opening.
Fig. 7 to Fig. 9 illustrate a second embodiment of the invention, wherein the cooling fluid flows through the cores, via gaps defined by a snap-fit connection between two core halves. Fig. 7 gives a cross section according to a curved plane parallel to the axial direction, Fig. 8 gives a detailed view of this cross section, and Fig. 9 gives a radial cross section.
Fig. 10 to Fig. 11 illustrate a third embodiment of the invention, wherein the cooling fluid flows through the cores, via dedicated channels. Fig. 10 gives a cross section according to a curved plane parallel to the axial direction, and Fig. 11 gives a radial cross section.

### Detailed Description of Embodiment(s)

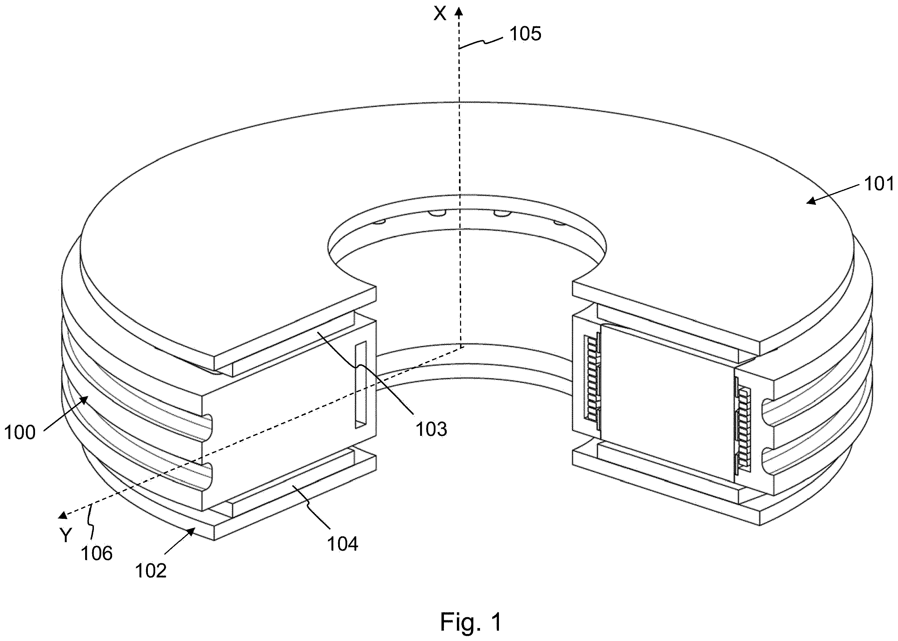

Fig. 1 illustrates a stator 100 and rotor of an axial flux machine. Two rotor disks 101, 102 are positioned on both sides of the stator disk 100. The stator disk 100 and the first respectively second rotor disk 101,102 are axially spaced apart by a first respectively second air gap. The stator disk 100 and rotor disks 101, 102 have a central axis in X-direction or axial direction 105, corresponding to the rotational axis of the machine. The radial direction 106 is indicated as Y-direction in the figure. The first rotor disk 101 comprises permanent magnets 103, and the second rotor disk 102 comprises permanent magnets 104.

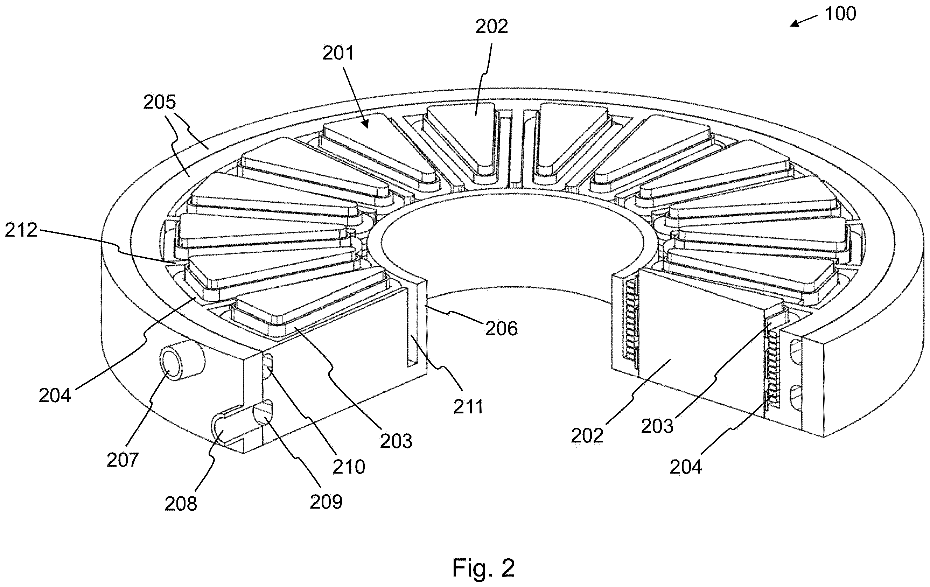

Fig. 2 shows the stator 100, of which the top cover 104 has been removed. The stator housing comprises an outer circumferential wall 205, and a coaxially arranged inner circumferential wall 206. The stator 100 comprises a plurality of stator members 201, placed in the internal space between the inner and outer circumferential wall 205, 206, and being arranged rotationally symmetrical with respect to the central axis 105. Every stator member 201 comprises a coil or winding 204, wound around a ferromagnetic core 202, the cores 202 extending in axial direction 105. Moreover, every stator member 201 comprises a sleeve 203 placed around the core 202, between the core 202 and the coil 204, the sleeve comprising walls extending in axial direction 105.

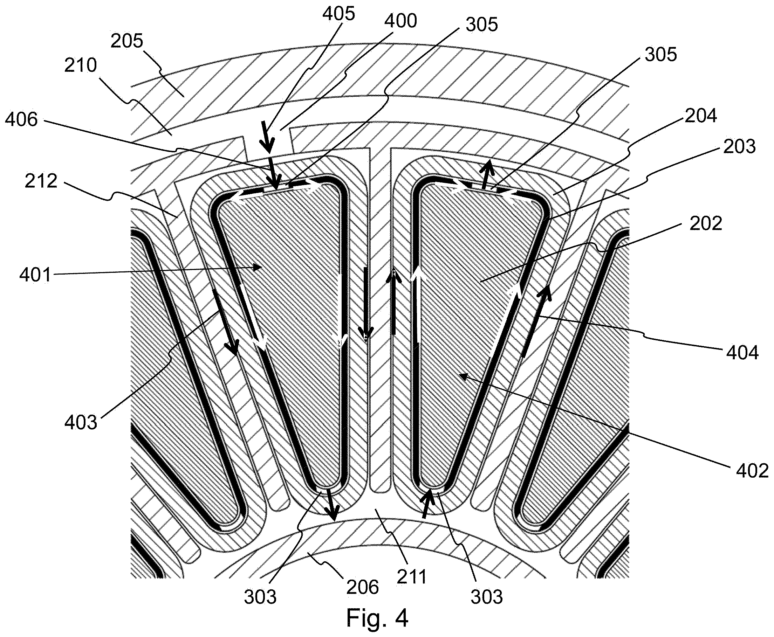

The stator 100 further comprises guiding walls 212, wherein a guiding wall 211 is positioned between each pair of adjacent stator members 201, and extends in radial direction 106. The guiding walls 211 are connected at one outer end to the outer circumferential wall 205. The outer circumferential wall 205 comprises outer channels 209 and 210, while the space between the guiding wall outer ends and the inner circumferential wall 206 defines an inner channel 211. The outer and inner channels 209, 210, 211 are arranged to let a stator cooling fluid flow tangentially about the central axis. On the other hand, the guiding walls 211 are arranged to let the stator cooling fluid flow in radial direction. For this purpose, radial fluid passages are available between every coil 204 and an adjacent radial wall 211. The outer channel 210 serves as a fluid supply channel or cold channel, and the outer channel 209 serves as a fluid draining channel or hot channel. The cooling fluid is supplied to the cold channel 210 via a supply port 207. As is visible form Fig. 4, apertures 400 are provided along the circumference allowing the cooling fluid to flow from the cold channel 210 to the inner space of the housing, where it flows in radial direction and is collected in the inner channel 211. Similar apertures are available with respect to the hot channel 209, allowing the cooling fluid to flow from the inner space of the housing to the hot channel 209. Furthermore, a drainage port 208 allows the heated cooling fluid to be drained from the hot channel 209.

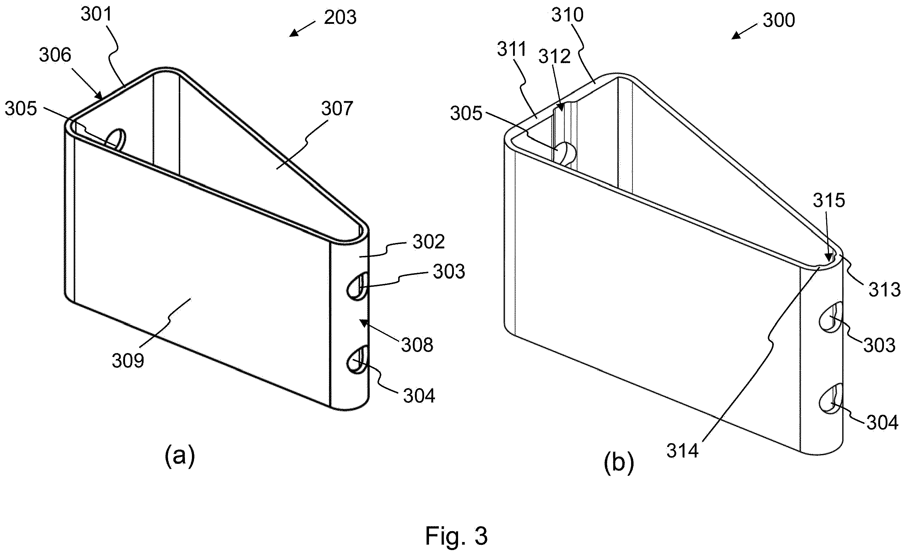

Fig. 3(a) shows a sleeve 203, being an injection-moulded part, and being comprised in any of the stator members 201 of Fig. 2. The sleeve 203 comprises a first wall 301, positioned at the back side 306 of the sleeve 203, an opposing second wall 302, positioned at the front side 308 of the sleeve, and sidewalls 307, 309. The walls 301, 302, 307, 309 are connected to each other, thereby forming a tube-shaped structure. The sleeve 203 comprises a first set of holes, provided as two openings 305, 900 in the first wall 301, and a second set of holes, provided as two openings 303, 304 in the second wall 302. Any of the openings 305, 900, 303, 304 is provided as a perforation through a sleeve wall, namely a circular aperture through the respective wall. The holes 305, 900 comprised in the first set are placed above one another, at the same radial position, and the holes 303, 304 comprised in the second set are placed above one another, at the same radial position. When being placed in the stator 100, the first set of holes 305, 900 is at the back side of a stator member 201, facing the outer circumferential wall 205. The second set of holes 303, 304 is at the front side of a stator member 201, facing the inner circumferential wall 206.

Fig. 3(b) shows another variant of a sleeve 300. The sleeve 300 is similar to the sleeve 203, but comprises a first recess or groove 312 at the inner side of the first wall, and a second recess or groove 315 at the inner side of the second wall. The recesses 312, 315 extend according to the axial direction 105, over the full height of the sleeve wall, thereby defining a first 312 respectively second axial channel 315. The first recess 312 is positioned at the same radial position as the first set of holes 305, 900, such that the holes 305, 900 penetrate through the first wall at the position of the first axial channel 312. Similarly, the second recess 315 is positioned at the same radial position as the second set of holes 303, 304, such that the holes 303, 304 penetrate through the second wall at the position of the second axial channel 315. Moreover, the first wall has a maximum thickness which is larger than the thickness of each of the sidewalls, due to the thicker wall portions 310, 311 at both sides of the recess 312. Similarly, the second wall has a maximum thickness which is larger than the thickness of each of the sidewalls, due to the thicker wall portions 313, 314 at both sides of the recess 315.

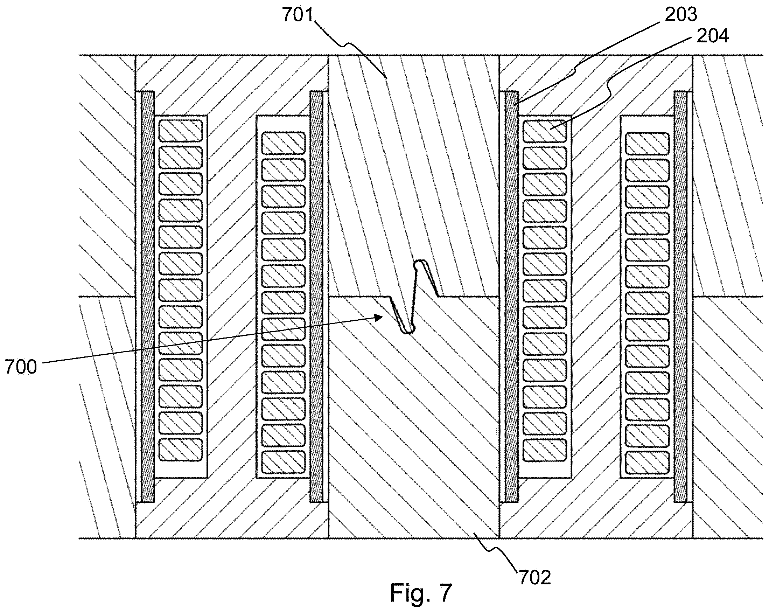

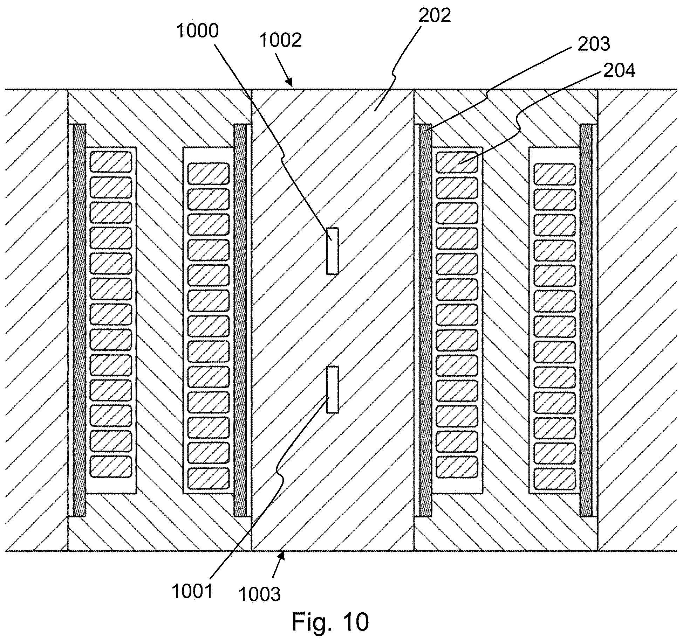

When the sleeve 203 or 300 is placed in the stator 100, the two holes 305, 900 of the first set are in fluid communication with the two holes 303, 304 of the second set. A cooling fluid may thus flow through the sleeve openings, either from the first set of holes 305, 900 towards the second set of holes 303, 304 or vice versa. Supplying a cooling fluid to the internal space of the stator housing results in the cooling fluid at least partly flowing via a path through the sleeve openings 305, 900, 303, 304, thereby flowing along and/or through the respective cores 202. Fig. 4 to Fig. 6 illustrate an embodiment wherein cooling fluid flows along the cores 202. Fig. 7 to Fig. 9, and Fig. 10 to Fig. 11, each illustrate an embodiment wherein cooling fluid flows through the cores 202. In the embodiment of Fig. 7-9 this is due to gaps remaining between snap-fitted core parts, while in the embodiment of Fig. 10-11 this is due to dedicated channels through core material.

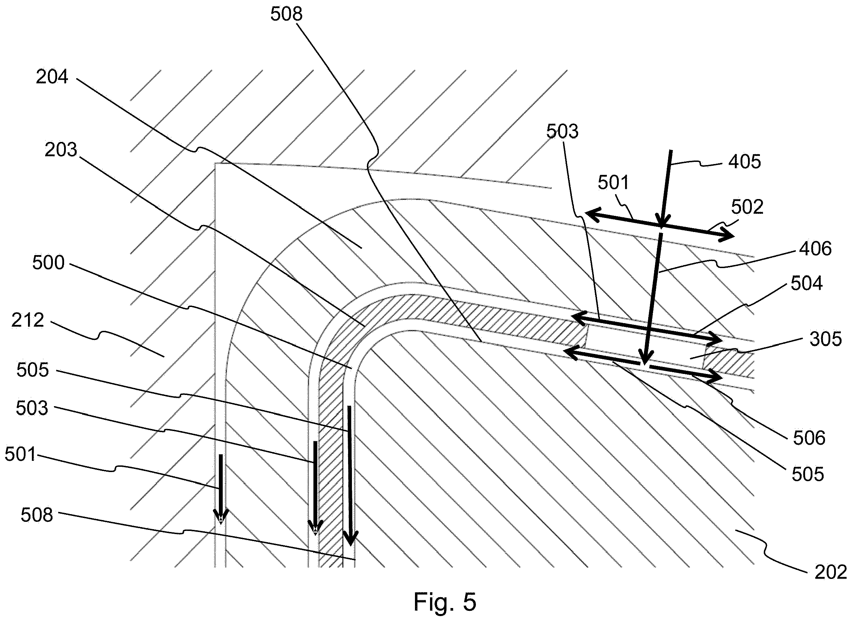

Fig. 4 shows that cold cooling fluid, circulating in tangential direction in the cold channel 210, enters the internal space of the housing via aperture 400, as is schematically indicated by arrow 405. Next, the cooling fluid flows in radial direction, from the outer towards the inner circumference, see arrow 403, thereby cooling the stator member 401. After having reached the inner channel 211, the fluid flows in radial direction, from the inner towards the outer circumference, see arrow 404, thereby cooling the adjacent stator member 402. The detail of Fig. 5 further shows that the main flow 405 splits into three substreams. A first substream 501, 502 flows around the stator member 401, between the coil 204 and guiding wall 212, wherein the guiding wall 212 forces the fluid to flow against the windings 204. The cooling fluid 501 may as well be forced in between the turns of the coil 204. In a second substream 503, 504, cooling fluid flows between the sleeve 203 and the coil 204, being in contact with the outer side of the sleeve 203. Finally, a third substream 505, 506 branches off from the main flow 405, resulting in cooling fluid flowing along the core 202, between the core surfaces 508 and the inside of sleeve 203, the cooling fluid 505 being in direct contact with the core outer surfaces 508.

Fig. 5 illustrates that cooling fluid reaches the sleeve 203 via fluid passages 406, the latter being present due to spacings between adjacent turns of the coil 204. Next, the cooling fluid flows through the holes 305, 900 of the first set, thereby reaching the core outer surface 508. With respect to the stator member 401, the first set of holes 305, 900 thus serve as entry holes. While flowing along the core 202, in direct contact with the core outer surfaces 508, the fluid flows in a channel 500, provided as a slit between the core outer surface 508 and the inside of the sleeve 203. The channel 500 extends in axial direction 105, over the full height of the sleeve 203. Next the streams 505, 506 at both sides of the core 202 come together at the front side of stator member 401, thereby reaching the holes 303, 304 of the second set. The holes 303, 304 of the second set thus serve as exit holes for stator member 401. Next, the cooling fluid flows along the core of stator member 402. As is clear from Fig. 4, for adjacent stator member 402, the cooling fluid enters via the second set of holes 303, 304, and subsequently flows towards the first set of holes 305, 900, the latter serving as exit holes for stator member 402.

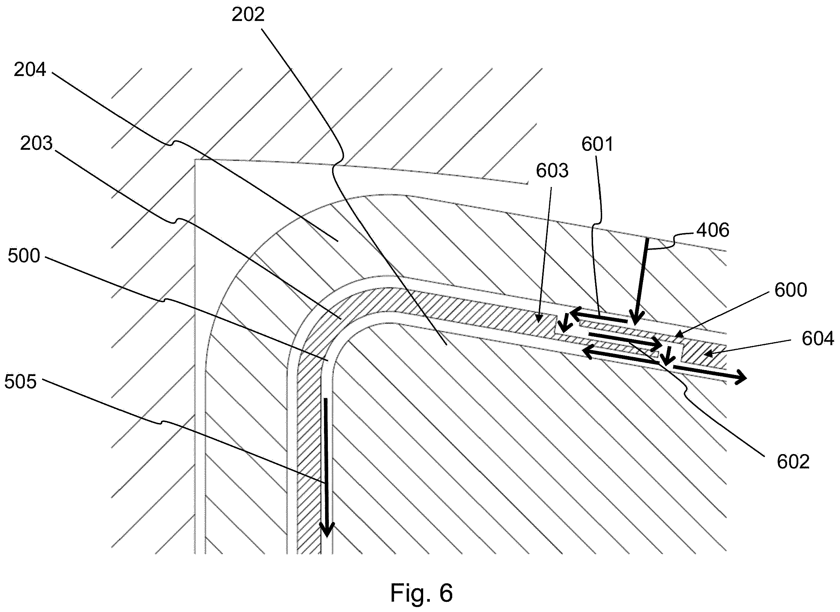

In the design of Fig. 4 and Fig. 5, the sleeve holes 305, 900, 303, 304 are circular apertures which establish a fluid passage in radial direction. Fig. 6 illustrates another design of the sleeve holes 600, wherein the holes 600 define a zig-zag passage through the sleeve walls 301, 302. The figure shows that the edges of hole 600 are designed according to a labyrinth, thereby forcing the fluid to follow a Z-shaped trajectory through the hole 600. Accordingly, unlike the hole 305, where a fluid flows through in radial direction, a fluid flowing through hole 600 is forced to deviate from the axial direction, see 601, 602. The zig-zag fluid passage through the hole 600 thus results in an increased path length of the fluid flow compared to the passage through hole 305, thereby minimizing the risk that an electric arc would be formed between the core 202 and the coil 204. Remark that, unlike the bordered circular perforations 305, 900, 303, 304, the sleeve holes 600 may be provided as an opening or slit extending over de full height of the sleeve. In this case, the sleeve walls 301 and 302 each are split into two separate portions 603, 604. The two separate portions 603, 604 are positioned on both sides of the split, and the zig-zag passage is created due to an overlap in the sleeve wall portions 603, 604.

Fig. 7 to Fig. 9 illustrate a second embodiment, wherein a portion of the cooling fluid flows through the respective cores 202. Similar to what was presented in Fig. 5 with respect to the first embodiment, in the second embodiment the main flow 405 splits into three substreams. Just like in the first embodiment, the first substream 501, 502 flows around the coil 204 and the second substream 503, 504 flows between the sleeve 203 and the coil 204. Different from the first embodiment however, in the second embodiment, the third substream flows through the core 200.

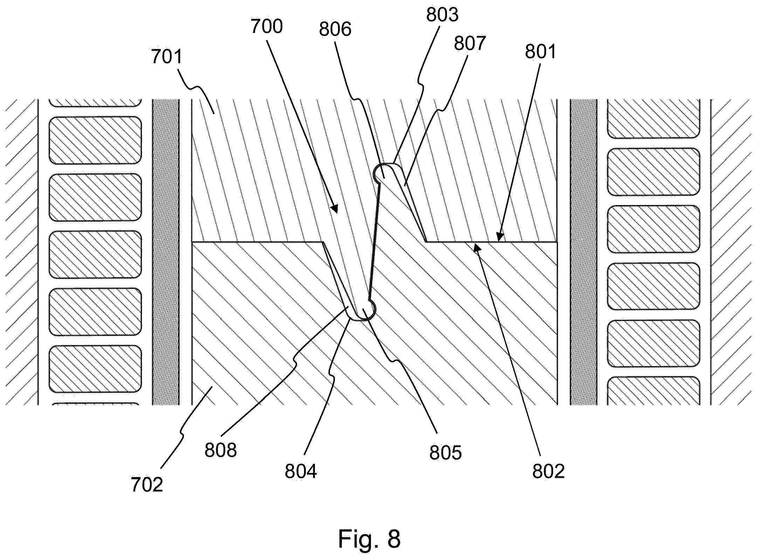

Fig. 7 and Fig. 8 shows that in the second embodiment, every core 200 is composed of two core parts 701, 702. The first core part 701 comprises a first connection surface 801, and the second core part 702 comprises a second connection surface 802. The two core parts 701, 702 are connected by means of a snap-fit connection 700. For this purpose, the first and second core part 701, 702 each comprise interlocking features, comprised in the first respectively second connection surface 801, 802. In particular, the first core part 701 comprises a protrusion 805 and a recess 803, and the second core part 702 comprises a protrusion 806 and a recess 804. The protrusion 805 fits into the recess 804, and the protrusion 806 fits into the recess 803. Due to the overhang present in the respective protrusions 805, 806 and corresponding undercut in the respective recesses 804, 803, the features interlock, thereby forming the snap-fit connection.

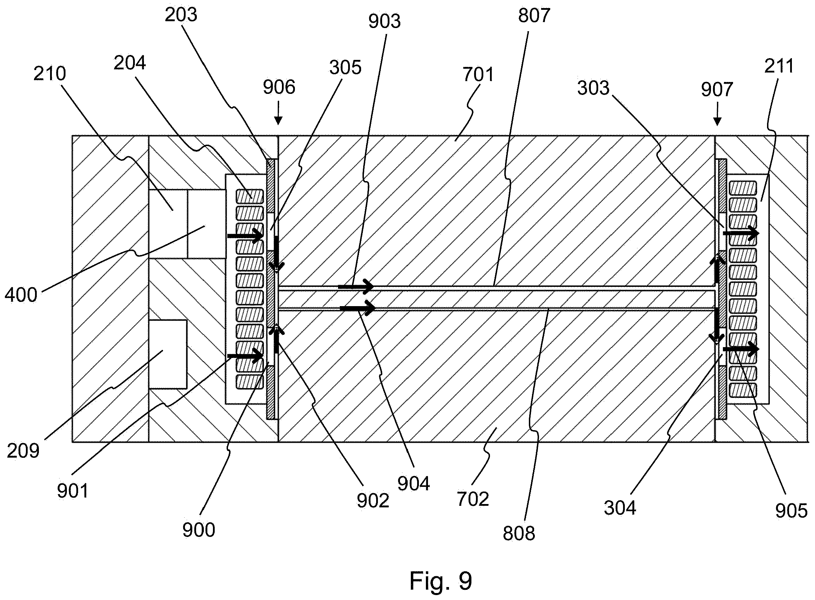

Fig. 8 shows that the connection surfaces 801, 802 are mainly in contact with one another, but not completely, due to gaps 808, 807 remaining between the interlocking features. The gaps 808, 807 are provided in order to facilitate the two core halves 701, 702 to be snapped together. The interlocking features extend over the respective connection surfaces 801, 802, from the back side of the core part 701, 702 to the front side of the core part 701, 702. Accordingly, the gaps 808, 807 each form a channel running through the core 202, extending between the back side 906 of the core 202 and the front side 907 of the core 202, as is visible on Fig. 9.

Fig. 9 shows that the first set of sleeve holes 305, 900 is in fluid communication with the second set of holes 303, 304, due to the core channels 807, 808. The channels 807, 808 each are at a different height position, and the respective flows 903, 904 through the channels 807, 808 run in a substantially radial direction. The figure further illustrates, that cooling fluid reaches the first set of sleeve holes 305, 900, due to the turns of the coil 204 being spaced apart, see 901. After flowing through the first set of holes 305, 900, the flow is redirected to the axial direction 105, see arrow 902, before reaching the core channels 807, 808. A slit extending in axial direction is thus present between the inside of the first sleeve wall 301 and the core outer surface 906, thereby allowing for the flow 902. Remark that such a slit may also be due to a recess 312 in the first sleeve wall 301, as was illustrated in Fig. 3(b). In such a case, the portions 310, 311 may even be pressed against the core outer surface.

Via the core channels 807, 808, the cooling fluid reaches the front side 907 of the core 202. While flowing through the channels 807, 808, the cooling fluid is in direct contact with the core material. Subsequently, the fluid flow is redirected to the axial direction 105, after which it flows through the holes 303, 304 of the second set. Fluid passages 905 between the turns of the coil 204 allow the cooling fluid to reach the inner channel 211. Thereafter, the cooling fluid flows through the second set of sleeve holes of an adjacent stator member, similar to what was presented in Fig. 4.

Fig 10 to Fig. 11 illustrate a third embodiment, wherein a portion of the cooling fluid flows through the respective cores 202. Similar to what was presented in Fig. 5 with respect to the first embodiment, in the third embodiment the main flow 405 splits into three substreams. Just like in the first embodiment, the first substream 501, 502 flows around the coil 204 and the second substream 503, 504 flows between the sleeve 203 and the coil 204. Different from the first embodiment however, in the third embodiment, the third substream flows through the core 200.

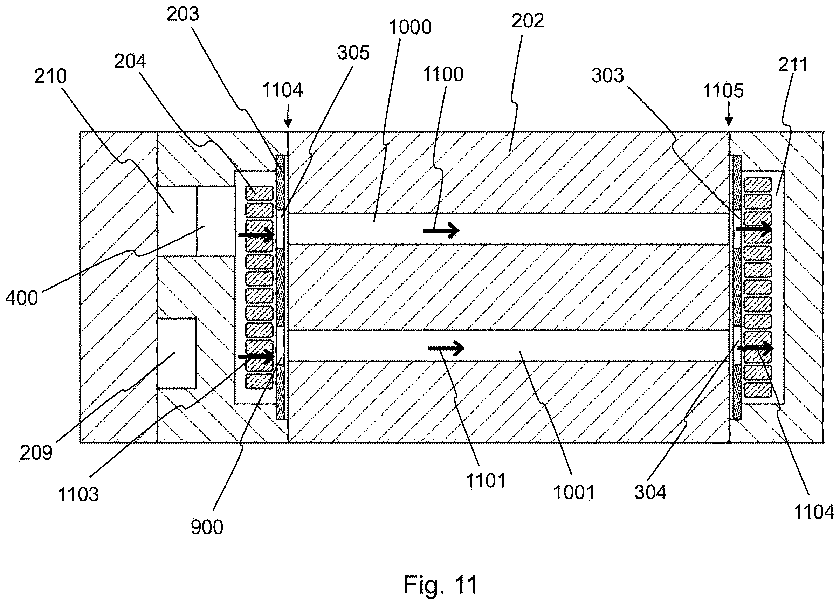

Fig. 10 and Fig. 11 show that in the third embodiment, cooling fluid may flow through the core 202, due to the presence of dedicated channels 1000, 1001 through the core 202. Both channels 1000, 1001 run through a massive portion of the core 202, and are applied intentionally to provide cooling channels through the core 202. Each channel 1000, 1001 runs in radial direction 106, and extends between the back side 1104 of the core 202 and the front side 1105 of the core. Moreover, the channels 1000, 1001 run in a direction perpendicular to the axial direction 105, and each of them is placed at a different height position. In the shown embodiment, the channel 1000 is positioned closer to the core centre than to the core end 1002, and the channel 1001 is positioned closer to the core centre than to the core end 1003. Both channels 1000, 1001 have a rectangular cross section, wherein the aspect ratio is such that the height is larger than the width.

Fig. 11 shows that the first set of sleeve holes 305, 900 is in fluid communication with the second set of holes 303, 304, due to the dedicated core channels 1000, 1001. The figure further illustrates, that cooling fluid reaches the first set of sleeve holes 305, 900, due to the turns of the coil 204 being spaced apart, see 1103. After flowing through the first set of holes 305, 900, the cooling fluid reaches the core channels 1000, 1001. If the holes 305, 900 are, different from Fig. 11, not at the same height position as the core channels 1000, 1001, the flow may first be redirected to the axial direction 105, before reaching the core channels 1000, 1001. In such a case, a slit extending in axial direction is present between the inside of the first sleeve wall 301 and the core outer surface 1104, which may be due to a recess 312 in the first sleeve wall 301, as was illustrated in Fig. 3(b).

Fig. 11 shows that the fluid flows in radial direction, see 1100, 1101, thereby being in direct contact with the core material bordering the channels 1000, 1001. Via the dedicated core channels 1000, 1001, the cooling fluid reaches the front side 1105 of the core 202. Subsequently, the fluid flow is redirected to the axial direction 105, after which it flows through the holes 303, 304 of the second set. Fluid passages 1104 between the turns of the coil 204 allow the cooling fluid to reach the inner channel 211. Thereafter, the cooling fluid flows through the second set of sleeve holes of an adjacent stator member, similar to what was presented in Fig. 4.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A stator (100) for an axial flux machine, the stator (100) comprising:
- a central axis in axial direction (105) corresponding to the rotational axis of the axial flux machine when mounted;
- a plurality of stator members (201), being arranged rotational symmetrically around the central axis, wherein each of the stator members (201) comprises:
∘ a ferromagnetic core (202);
∘ a coil (204), comprising a plurality of turns wound around the core (202);
∘ a sleeve (203) placed around the core (202), between the core (202) and the coil (204), the sleeve (203) comprising walls (301, 302, 307, 309) extending in axial direction,
- a housing comprising an internal space located between an inner (206) and outer circumferential wall (205), the stator members (201) placed inside the internal space, and the housing further comprising one or more ports (207) adapted for supplying a cooling fluid,
**CHARACTERIZED IN THAT**:
for any of the stator members (201), the sleeve (203) comprises a first (305, 900) and a second set of holes (303, 304), the sets each comprising one or more holes provided as openings in a sleeve wall (301, 302), and any of the holes comprised in the first set (305, 900) being in fluid communication with at least one hole comprised in the second set (303, 304),
such that cooling fluid supplied to the internal space, for any of the stator members (201) at least partly flows via a path through the sleeve openings (305, 900, 303, 304), thereby flowing along and/or through the respective cores (202).

2. Stator (100) according to claim 1,
wherein cooling fluid supplied to the internal space at least partly flows along and/or through the cores (202), thereby being in direct contact with the respective cores (202).

3. Stator (100) according to any of the preceding claims,
wherein cooling fluid supplied to the internal space at least partly flows along the cores (202), thereby flowing, for each of the stator members (201), in one or more channels (500) between the respective sleeve (203) and core (202).

4. Stator (100) according to claim 3,
wherein any of the channels (500) between the sleeve (203) and the core (202) is defined by:
- an open space between the core surface (508) and a sleeve wall (301, 307, 309, 302), over the full height of the sleeve (203), the height being measured according to the axial direction (105), and/or
- a groove provided in the core surface (508), and/or
- a groove provided at the inner side of a sleeve wall (301, 307, 309, 302), the inner side facing the core (202).

5. Stator (100) according to any of the preceding claims,
wherein cooling fluid supplied to the internal space at least partly flows through the cores (202), thereby flowing, for each of the stator members (201), in one or more channels (807, 808, 1000, 1001) running through the respective core (202).

6. Stator (100) according to claim 5,
wherein, for each of the stator members (201), the core (202) is split at one or more positions along its height, such that the core (202) is composed of multiple core parts (701, 702), two opposing core parts (701, 702) connected to each other at respective connection surfaces (801, 802),
and wherein at least one of the channels through the core (202) is defined by a gap (807, 808) remaining between opposing connection surfaces (801, 802) in connected condition of the core parts (701, 702).

7. Stator according (100) to claim 5 or 6,
wherein, for each of the stator members (201), the core (202) is composed of multiple core parts (701, 702), connected to each other by means of a snap-fit connection (700),
and wherein at least one of the channels through the core (202) is defined by a gap (807, 808) remaining between interlocking features of the snap fit (700) in connected condition of opposing core parts (701, 702).

8. Stator (100) according to claim 5 to 7,
wherein at least one of the channels through the core (202) is a dedicated channel (1000, 1001) provided in a massive portion of the core (202).

9. Stator (100) according to claim 8,
wherein the cross section of the dedicated channel (1000, 1001) has a rectangular shape, the aspect ratio of the rectangular cross section being such that the height is larger than the width.

10. Stator (100) according to claim 5 to 9,
wherein any of the channels (1000, 1001) through the core (202) runs according to a direction perpendicular to the height direction, the height direction corresponding to the axial direction (105) of the machine,
and wherein, for any of the channels (1000, 1001) through the core (202), the height position is such that the channel (1000, 1001) is closer to the core centre than to the first core end (1002) and is closer to the core centre than to the second core end (1003).

11. Stator (100) according to any of the preceding claims,
wherein, for any of the stator members (201), the first set of holes (305, 900) and the second set of holes (303, 304) are positioned at opposite sides (306, 308) of the core sleeve (203), the first set (305, 900) directed to the outer circumferential wall (205) of the housing, and the second set (303, 304) directed to the inner circumferential wall (206) of the housing.

12. Stator (100) according to any of the preceding claims,
wherein, for any of the stator members (201), each of the holes (600) comprised in the first and/or second set defines a zig-zag passage through a sleeve wall (301, 302).

13. Stator (100) according to any of the preceding claims,
wherein, for any of the stator members (201), the core sleeve (203) comprises a first wall (301) directed to the outer circumferential wall (205) of the housing, a second wall (302) directed to the inner circumferential wall (206) of the housing, and sidewalls (307, 309) directed to an adjacent stator member, the holes of the first (305, 900) respectively second set (303, 304) being provided as openings in the first (301) respectively second wall (302),
and wherein at least a portion (310, 311) of the first wall (301) has a larger thickness than each of the sidewalls (307, 309), and at least a portion (313, 314) of the second wall (302) has a larger thickness than each of the sidewalls (307, 309).

14. Stator (100) according to any of the preceding claims,
wherein, for any of the stator members (201), at least some of the turns of the coil (204) are spaced apart, thereby establishing fluid passages (406, 901, 1103) through the coil (204).

15. Stator (100) according to any of the preceding claims,
wherein the stator (100) is arranged such that, for any of the stator members (201), a main flow of cooling fluid splits into multiple substreams, comprising:
- a first substream (501, 502) wherein cooling fluid flows around the stator member (201), in direct contact with the side of the coil (204) facing away from the core (202), and/or a second substream (503, 504) wherein cooling fluid flows around the core sleeve (203), in direct contact with the side of the sleeve (203) facing away from the core (202),
and
- a third substream (505, 506) wherein cooling fluid flows via the path through the sleeve openings, thereby flowing along and/or through the core (202).
